# EUROPEAN PATENT APPLICATION

(11) **EP 3 910 442 A1**
(43) Date of publication of application: **17.11.2021**
(21) Application number: 21177297.5
(22) Date of filing: 02.06.2021
(51) Int. Cl.: G05D 1/02, B60W 30/14, B60W 50/00, G06N 20/00, G06N 7/00, G08G 1/01

(54) **METHOD, APPARATUS, AND DEVICE FOR TRAINING LONGITUDINAL DYNAMICS MODEL**

(30) Priority: 29.06.2020 CN 202010606285
(71) Applicant: Beijing Baidu Netcom Science and Technology Co., Ltd., Beijing 100085 (CN)
(72) Inventor: ZHANG, Lianchuan, Beijing, 100085 (CN)
(74) Representative: advotec.

(57) **Abstract**

The disclosure provides a method for training a longitudinal dynamics model, an apparatus for training a longitudinal dynamics model, an electronic device, and a storage medium, which relates to the fields of intelligent driving technologies and deep learning technologies. The method includes: acquiring a longitudinal dynamics model in a vehicle; acquiring historical driving data of the vehicle during driving, in which the historical driving data includes historical pedaling volumes, historical driving speeds, and historical accelerations; generating training data based on the historical pedaling volumes and the historical driving speeds, and generating prediction data of the longitudinal dynamics model by inputting the training data to the longitudinal dynamics model; generating target data based on the historical accelerations; and training the longitudinal dynamics model based on the target data and the prediction data.

## Description

### TECHNICAL FIELD

The disclosure relates to the field of intelligent driving technologies, specifically to the field of deep learning technologies, and in particular to a method for training a longitudinal dynamics model, an apparatus for training a longitudinal dynamics model, an electronic device, and a storage medium.

### BACKGROUND

Intelligent vehicles, as an important part of an intelligent transportation system, are high-tech carriers that integrate functions such as environmental perception, planning, decision-making, and motion control, which may realize autonomous driving in different road environments and represent an important direction of future development of vehicles.

The motion control is one of key links to realize the autonomous driving of the intelligent vehicles. Longitudinal motion control is a main research content of the motion control, and a longitudinal dynamics model plays an important role for vehicle control.

### SUMMARY

The disclosure provides a method for training a longitudinal dynamics model, an apparatus for training a longitudinal dynamics model, an electronic device, and a storage medium.

In a first aspect, embodiments of the disclosure provide a method for training a longitudinal dynamics model. The method includes: acquiring a longitudinal dynamics model in a vehicle; acquiring historical driving data of the vehicle during driving, in which the historical driving data includes historical pedaling volumes, historical driving speeds, and historical accelerations; generating training data based on the historical pedaling volumes and the historical driving speeds, and generating prediction data of the longitudinal dynamics model by inputting the training data to the longitudinal dynamics model; generating target data based on the historical accelerations; and training the longitudinal dynamics model based on the target data and the prediction data.

In a second aspect, embodiments of the disclosure provide an apparatus for training a longitudinal dynamics model. The apparatus includes: a first acquiring module, a second acquiring module, a first generating module, a second generating module, and a first training module. The first acquiring module is configured to acquire a longitudinal dynamics model in a vehicle. The second acquiring module is configured to acquire historical driving data of the vehicle during driving, in which the historical driving data includes historical pedaling volumes, historical driving speeds, and historical accelerations. The first generating module is configured to generate training data based on the historical pedaling volumes and the historical driving speeds, and generate prediction data of the longitudinal dynamics model by inputting the training data to the longitudinal dynamics model. The second generating module is configured to generate target data based on the historical accelerations. The first training module is configured to train the longitudinal dynamics model based on the target data and the prediction data.

In a third aspect, embodiments of the disclosure provide an electronic device. The electronic device includes: at least one processor and a memory communicatively connected with the at least one processor. The memory stores instructions executable by the at least one processor. When the instructions are executed by the at least one processor, the at least one processor executes the method for training the longitudinal dynamics model according to the first aspect of the disclosure.

In a fourth aspect, embodiments of the disclosure provide a non-transitory computer-readable storage medium storing computer instructions thereon, in which the computer instructions are configured to make a computer execute the method for training the longitudinal dynamics model according to the first aspect of the disclosure.

Further embodiments are defined by the dependent claims.

It should be understood that the content described in this section is not intended to identify key or important features of embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a schematic diagram of Embodiment 1 of the disclosure.
FIG. 2 is a schematic diagram of Embodiment 2 of the disclosure.
FIG. 3 is a schematic diagram of Embodiment 3 of the disclosure.
FIG. 4 is a schematic diagram of Embodiment 4 of the disclosure.
FIG. 5 is a schematic diagram of Embodiment 5 of the disclosure.
FIG. 6 is a schematic diagram of Embodiment 6 of the disclosure.
FIG. 7 is a schematic diagram of Embodiment 7 of the disclosure.
FIG. 8 is a block diagram of an electronic device for implementing a method for training a longitudinal dynamic model according to embodiments of the disclosure.

### DETAILED DESCRIPTION

The following describes the exemplary embodiments of the disclosure with reference to the accompanying drawings, which includes various details of the embodiments of the disclosure to facilitate understanding and shall be considered merely exemplary. Therefore, those of ordinary skill in the art should recognize that various changes and modifications may be made to the embodiments described herein without departing from the scope of the disclosure. For clarity and conciseness, descriptions of well-known functions and structures are omitted in the following description.

In the related art, there is a technical problem that it is difficult to control the vehicle smoothly and comfortably based on dynamics because there is a large amount of parameters in the general dynamics model and the general dynamics model is complex due to vehicle dynamics, tyre dynamics of drive system and other issues, and further because some parameters of the general dynamics model change with the service life of the vehicle. In order to solve the problems in the related art, the disclosure provides a method for training a longitudinal dynamics model, an apparatus for training a longitudinal dynamics model, an electronic device, and a storage medium.

The method for training the longitudinal dynamics model, the apparatus for training the longitudinal dynamics model, the electronic device, and the storage medium, provided in the embodiments of the disclosure are described with reference to the drawings.

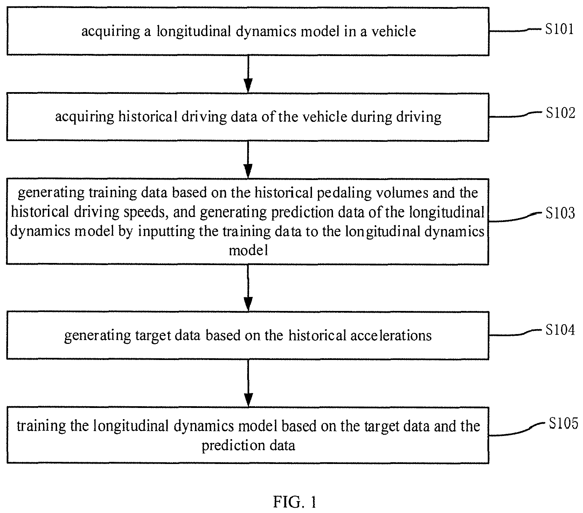

FIG. 1 is a flowchart of a method for training a longitudinal dynamics model according to some embodiments of the disclosure. It should be noted that the method for training the longitudinal dynamic model provided in the embodiments of the disclosure may be applicable to the apparatus for training the longitudinal dynamic model provided in the embodiments of the disclosure. The apparatus may be configured in a vehicle or in an electronic device that communicates with the vehicle. The apparatus may be configured to combine the historical driving data in the vehicle to realize real-time online training of the longitudinal dynamics model in the vehicle, thereby adjusting the longitudinal dynamics model in the vehicle based on the historical driving data in the vehicle, and further improving the accuracy of vehicle control based on the adjusted longitudinal dynamics model.

At block S101, a longitudinal dynamics model in a vehicle is acquired.

In some embodiments, the longitudinal dynamics model refers to a model that has learned longitudinal dynamics knowledge and is capable of processing longitudinal dynamics data.

As a possible implementation, the longitudinal dynamics model may be acquired through training based on training sample data of data related to longitudinal dynamics.

As another possible implementation, the longitudinal dynamics model may be acquired through learning and training of a deep belief network.

As another possible implementation, the longitudinal dynamics model may be acquired through training based on a driving control table in the vehicle. The process of acquiring the longitudinal dynamics model through training based on the driving control table is described in the embodiments below.

At block S102, historical driving data of the vehicle during driving is acquired.

For example, the historical driving data may be driving data within a preset time period. The preset time period is set in advance. The preset time period may be half a year, a year, or a year and a half. For example, historical driving data within six months is acquired.

The historical driving data includes a historical pedaling volume, a historical driving speed and a historical acceleration at each historical moment. The historical pedaling volume may include a historical accelerator pedaling volume and a historical brake pedaling volume.

In some embodiments, the apparatus may acquire the historical driving data of the vehicle during driving from a vehicle database.

For example, the historical driving data of the vehicle during driving is acquired from the vehicle database through the electronic device. The historical driving data includes a pedaling volume, a driving speed, and an acceleration of the vehicle at the same moment during manual driving of the vehicle. It is understandable that the manual driving process is a driving process in which the vehicle is driven manually and safe from traffic accidents, and passengers in the vehicle feel more comfortable during driving.

In some embodiments, the apparatus may acquire the historical driving data of the vehicle during driving from a vehicle-mounted box. The vehicle-mounted box may be understood as a wireless gateway to provide a remote communication interface for the entire vehicle, which provides services such as collection of vehicle driving data and vehicle fault monitoring.

In some embodiments, a plurality of sensors in the vehicle may collect data such as pedaling volumes, driving speeds, and accelerations in real time, and send the data collected in real time to the apparatus, so that the apparatus acquires the historical driving data sent by the plurality of sensors. The plurality of sensors may include, but be not limited to, acceleration sensors, speed sensors, and pressure sensors.

At block S103, training data is generated based on the historical pedaling volumes and the historical driving speeds, and prediction data of the longitudinal dynamics model is generated by inputting the training data to the longitudinal dynamics model.

In detail, after the historical driving data is acquired, data such as the historical pedaling volumes and the historical driving speeds in the historical driving data are determined as sample data to generate the training data, and the training data is input into the longitudinal dynamic model to generate the prediction data for the longitudinal dynamics model.

That is, data such as the historical pedaling volumes and the historical driving speeds in the historical driving data are determined as the training data and the training data is input into the longitudinal dynamic model, and the longitudinal dynamic model outputs the prediction data of accelerations, that is, prediction acceleration data or prediction data.

At block S104, target data is generated according to the historical accelerations.

That is, if the historical driving data is acquired, data such as the historical accelerations in the historical driving data is generated into the target data, that is, the target acceleration data.

At block S105, the longitudinal dynamics model is trained based on the target data and the prediction data.

In detail, the historical pedaling volume and the historical driving speed at the same historical moment may be input into the longitudinal dynamics model simultaneously. The prediction acceleration output by the longitudinal dynamic model is acquired. The historical acceleration (i.e., the target data) corresponding to the historical pedaling volume and the historical driving speed at the same historical moment may be acquired simultaneously. The difference between the prediction acceleration and the historical acceleration is acquired, and the parameters of the longitudinal dynamics model are adjusted until the acceleration output by the longitudinal dynamic model matches the corresponding historical acceleration. Therefore, the training of the longitudinal dynamic model is realized.

With the method for training the longitudinal dynamics model provided in the embodiments of the disclosure, the longitudinal dynamics model in the vehicle is acquired, and the historical driving data of the vehicle during driving is acquired, in which the historical driving data includes the historical pedaling volumes, the historical driving speeds, and the historical accelerations. The training data is generated based on the historical pedaling volumes and the historical driving speeds, and input into the longitudinal dynamics model to generate the prediction data for the longitudinal dynamics model. The target data is generated based on the historical accelerations. The longitudinal dynamics model is trained based on the target data and the prediction data. The longitudinal dynamics model is trained based on the historical driving data to make the longitudinal dynamics model more optimal, so that the method for training the model effectively reduces the control error in the scene of actual control of the vehicle.

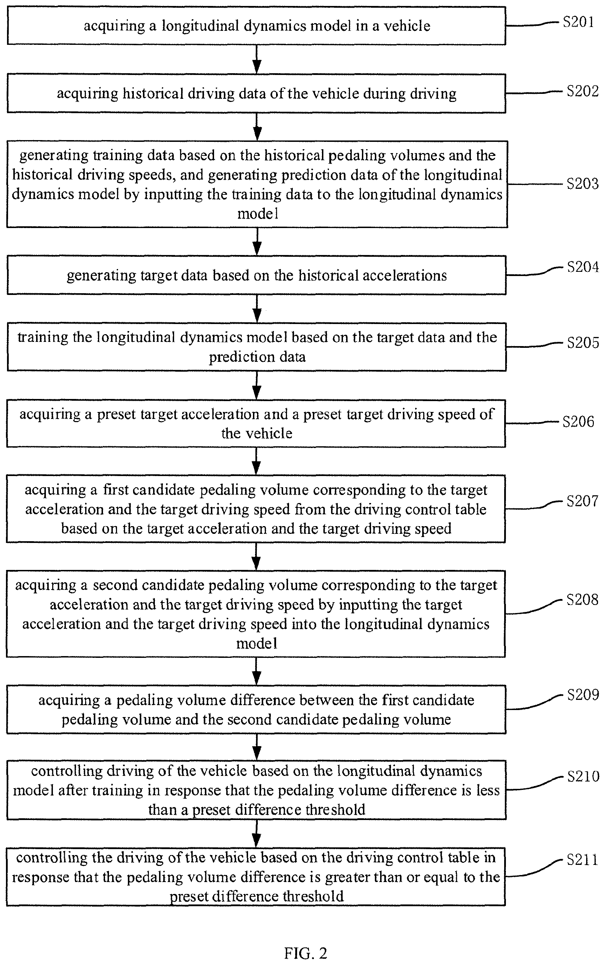

In order to make the disclosure easier to be understand by those skilled in the art, FIG. 2 is a flowchart of a method for training a longitudinal dynamics model according to some embodiments of the disclosure. FIG. 2 is a diagram of a method for training a longitudinal dynamic model according to some embodiments of the disclosure. As illustrated in FIG. 2, the method for training the longitudinal dynamics model may include the following.

At block S201, a longitudinal dynamics model in a vehicle is acquired.

In some embodiments, before acquiring the longitudinal dynamics model in the vehicle, a driving control table in the vehicle is acquired through an electronic device. Accelerations and driving speeds in the driving control table are determined as an input of a deep belief network. Pedaling volumes corresponding to the accelerations and the driving speeds in the driving control table are determined as an output of the deep belief network. The deep belief network is trained to acquire the longitudinal dynamics model.

The driving control table in the vehicle is established in the following ways. By establishing a driving model of a mapping relation among the historical pedaling volumes, the historical driving speeds, and the historical accelerations of the vehicle, the target driving speed and the target acceleration are input to the driving model. The target pedaling volume corresponding to the target driving speed and the target acceleration, output by the driving model, may be acquireed. The driving control table of the vehicle is established based on the corresponding relation among the target driving speed, the target acceleration, and the target pedaling volume of the vehicle. The input information in the driving control table is the target driving speed and the target acceleration, and the output information in the driving control table is the target pedaling volume. For the specific implementation process, reference may be made to the subsequent embodiments.

For example, the electronic device acquires the driving control table in the vehicle, and the accelerations and the driving speeds in the driving control table may be determined as the input of the Deep Belief Network Framework (DBN), and the pedaling volumes corresponding to the accelerations and the driving speeds in the driving control table may be taken as the output of the DBN, and the DBN is trained to acquire the longitudinal dynamics model.

At block S202, historical driving data of the vehicle during driving is acquired.

The historical driving data includes historical pedaling volumes, historical driving speeds, and historical accelerations. For example, the historical pedaling volumes may include historical accelerator pedaling volumes and historical brake pedaling volumes.

For example, the electronic device may acquire the historical driving data of the vehicle during driving from the database. That is, it is understood that the historical accelerator pedaling volume, the historical driving speed, and the historical acceleration may be acquired when the vehicle is accelerating during driving, and the historical brake pedaling, the historical driving speed, and the historical acceleration may be acquired when the vehicle is decelerating during driving.

At block S203, training data is generated based on the historical pedaling volumes and the historical driving speeds, and prediction data of the longitudinal dynamics model is generated by inputting the training data to the longitudinal dynamics model.

That is, data such as the historical pedaling volumes and the historical driving speeds in the historical driving data are determined as the training data and the training data is input into the longitudinal dynamic model, and the longitudinal dynamic model outputs the prediction data of accelerations, that is, prediction acceleration data or prediction data.

At block S204, target data is generated according to the historical accelerations.

That is, if the historical driving data is acquired, data such as the historical accelerations in the historical driving data is generated into the target data, that is, the target acceleration data.

At block S205, the longitudinal dynamics model is trained based on the target data and the prediction data.

That is, the prediction acceleration data and the target acceleration data are acquired. The parameters in the longitudinal dynamics model are adjusted according to the difference between the prediction acceleration data and the target acceleration data, until the acceleration output by the longitudinal dynamics model matches the target acceleration data, so as to realize the training of the longitudinal dynamic model.

At block S206, a preset target acceleration and a preset target driving speed of the vehicle are acquired.

That is, the acceleration and the driving speed of the vehicle may be set in advance, and the set acceleration and driving speed may be used as the target acceleration and the target driving speed, so that the target acceleration and the target driving speed set in advance are acquired.

At block S207, a first candidate pedaling volume corresponding to the target acceleration and the target driving speed is acquired from the driving control table based on the target acceleration and the target driving speed.

That is, the driving control table, based on the target acceleration and the target driving speed, acquires the first candidate pedaling volume corresponding to the target acceleration and the target driving speed based on the corresponding relation among speeds, accelerations, and pedaling volumes.

At block S208, a second candidate pedaling volume corresponding to the target acceleration and the target driving speed is acquired by inputting the target acceleration and the target driving speed into the longitudinal dynamics model.

That is, the target acceleration and the target driving speed are input into the longitudinal dynamics model, so that the second candidate pedaling volume corresponding to the target acceleration and the target driving speed is acquired from the longitudinal dynamics model.

At block S209, a pedaling volume difference between the first candidate pedaling volume and the second candidate pedaling volume is acquired.

That is, the electronic device acquires the pedaling volume difference between the first candidate pedaling volume corresponding to the target acceleration and the target driving speed in the driving control table and the second candidate pedaling volume corresponding to the target acceleration and the target driving speed in the longitudinal dynamics model.

At block S210, driving of the vehicle is controlled based on the longitudinal dynamics model after training in response that the pedaling volume difference is less than a preset difference threshold.

That is, the pedaling volume difference between the first candidate pedaling volume and the second candidate pedaling volume is acquired, and the pedaling volume difference between the first candidate pedaling volume and the second candidate pedaling volume is compared with the preset difference threshold. If the pedaling volume difference is less than the preset difference threshold, driving of the vehicle is controlled based on the pedaling volume output by the longitudinal dynamics model after training.

In some embodiments of the disclosure, the electronic device may acquire the preset acceleration and the preset driving speed adopted by the vehicle at the at least one position of the preset road section, and input the preset acceleration and the preset driving speed into the longitudinal dynamics model after training to acquire the pedaling volume adopted at the at least one position, and control the driving of the vehicle on the preset road section based on the pedaling volume adopted at the at least one position.

At block S211, the driving of the vehicle is controlled based on the driving control table in response that the pedaling volume difference is greater than or equal to the preset difference threshold.

That is, the pedaling volume difference between the first candidate pedaling volume and the second candidate pedaling volume is compared with the preset difference value. If the pedaling volume difference is greater than or equal to the preset difference threshold, the vehicle is controlled to drive based on the pedaling volume output by the driving control table.

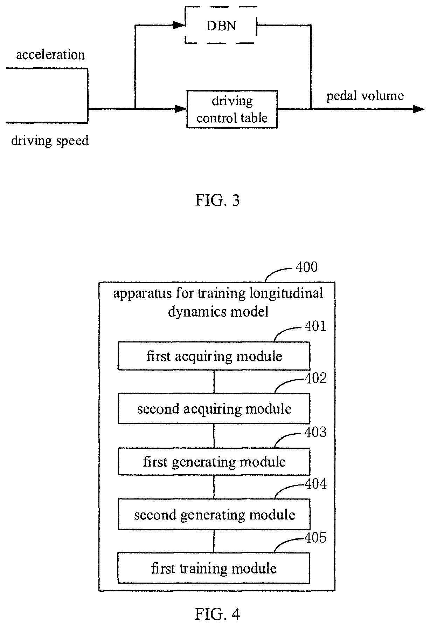

In order to enable those skilled in the art to clearly understand the disclosure, the process of the embodiments is described below with reference to FIG. 3. As illustrated in FIG. 3, the longitudinal dynamics model and the driving control table are in a parallel relationship.

In detail, the driving control table deployed for the vehicle is acquired. The DBN is trained based on the driving control table in FIG. 3, to acquire the initial longitudinal dynamics model in the vehicle.

Correspondingly, during the driving of the vehicle, the driving of the vehicle is controlled based on the driving control table arranged in the vehicle, and the driving data of the vehicle is recorded during the driving of the vehicle to acquire the historical driving data of the vehicle.

After determining that the historical driving data reaches a certain amount, the initial longitudinal dynamics model may be trained based on the historical driving data to acquire the longitudinal dynamics model after training.

Correspondingly, after acquiring the dynamic model, the preset target acceleration and the preset target driving speed of the vehicle are acquired. The first candidate pedaling volume corresponding to the target acceleration and the target driving speed may be acquired from the driving control table based on the target acceleration and the target driving speed. The second candidate pedaling volume corresponding to the target acceleration and the target driving speed may be acquired by inputting the target acceleration and the target driving speed into the longitudinal dynamics model. If the pedaling volume difference is less than the preset difference threshold, the longitudinal dynamics model in FIG. 3 is turned on to control the driving of the vehicle, and output of the driving control table is turned off. Based on the above embodiments, after controlling the driving of the vehicle based on the longitudinal dynamics model, in order to train the model for a long time period, the purpose of updating the model as the vehicle usage period increases, the historical driving data is updated.

In some embodiments, historical driving data is updated by: acquiring an actual acceleration of the vehicle at the current moment through the inertial measurement unit (IMU) in the vehicle; acquiring a preset acceleration corresponding to the current moment; acquiring an acceleration error between the actual acceleration and the preset acceleration; acquiring an actual pedaling volume and an actual driving speed at the current moment in response that the acceleration error exceeds a preset error threshold; and updating the historical driving data by adding the actual acceleration, the actual pedaling volume, and the actual driving speed to the historical driving data.

For example, the acceleration at the current moment is set in advance, and this acceleration is acquired. The actual acceleration of the vehicle at the current moment is detected and determined by the IMU. The error value between the current actual acceleration of the vehicle and the preset acceleration is acquired. If the error value is greater than the preset error threshold, the actual acceleration, the actual driving speed, and the actual pedaling volume at the current moment are input into the longitudinal dynamics model for storage, and the historical driving data is updated to optimize the longitudinal dynamics model.

In some embodiments of the disclosure, if the acceleration error does not exceed the preset error threshold, the historical driving data may not be updated.

With the method for training the longitudinal dynamics model provided in embodiments of the disclosure, the longitudinal dynamic model is trained based on the historical driving data. The preset target acceleration and the preset target driving speed of the vehicle are acquired. The difference between the first candidate pedaling volume output by the target acceleration and the target driving speed in the driving control table and the second candidate pedaling volume output by the target acceleration and the target driving speed in the longitudinal dynamics model is acquired. The driving of the vehicle is controlled by the longitudinal dynamics model after training, and the model is re-tuned based on the actual acceleration, the actual pedaling volume, and the actual driving speed. Therefore, the historical driving data is updated to make the adjusted longitudinal dynamics model more optimal, so that the method for training the model effectively reduces the control error in the scene of actual control of the vehicle.

Corresponding to the method for training the longitudinal dynamics model according to the above embodiments, embodiments of the disclosure further provide the apparatus for training the longitudinal dynamics model. Therefore, the method for training the longitudinal dynamics model according to the above embodiments is also applicable to the apparatus for training the longitudinal dynamics model according to the embodiments, which is not described in detail in the embodiments. FIGS. 4-7 are schematic diagrams of an apparatus for training a longitudinal dynamics model according to some embodiments of the disclosure.

As illustrated in FIG. 4, the apparatus 400 for training the longitudinal dynamics model includes: a first acquiring module 401, a second acquiring module 402, a first generating module 403, a second generating module 404, and a first training module 405.

The first acquiring module 401 is configured to acquire a longitudinal dynamics model in a vehicle.

The second acquiring module 402 is configured to acquire historical driving data of the vehicle during driving, in which the historical driving data includes historical pedaling volumes, historical driving speeds, and historical accelerations.

The first generating module 403 is configured to generate training data based on the historical pedaling volumes and the historical driving speeds, and generate prediction data of the longitudinal dynamics model by inputting the training data to the longitudinal dynamics model.

The second generating module 404 is configured to generate target data based on the historical accelerations.

The first training module 405 is configured to train the longitudinal dynamics model based on the target data and the prediction data.

With the apparatus for training the longitudinal dynamics model provided in the embodiments of the disclosure, the longitudinal dynamics model in the vehicle is acquired, and the historical driving data of the vehicle during driving is acquired, in which the historical driving data includes the historical pedaling volumes, the historical driving speeds, and the historical accelerations. The training data is generated based on the historical pedaling volumes and the historical driving speeds, and input into the longitudinal dynamics model to generate the prediction data for the longitudinal dynamics model. The target data is generated based on the historical accelerations. The longitudinal dynamics model is trained based on the target data and the prediction data. The longitudinal dynamics model is trained based on the historical driving data to make the longitudinal dynamics model more optimal, so that the method for training the model effectively reduces the control error in the scene of actual control of the vehicle.

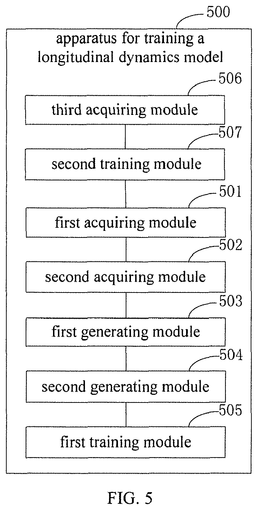

In some embodiments, 501 to 505 in FIG. 5 have the same function and structure as 401 to 405 in FIG. 4. As illustrated in FIG. 5, the apparatus further includes: a third acquiring module 506, configured to acquire a driving control table in the vehicle; and a second training module 507, configured to determine accelerations and driving speeds in the driving control table as an input of a deep belief network, and determine pedaling volumes corresponding to the accelerations and the driving speeds in the driving control table as an output of the deep belief network, to train the deep belief network, so as to acquire the longitudinal dynamics model.

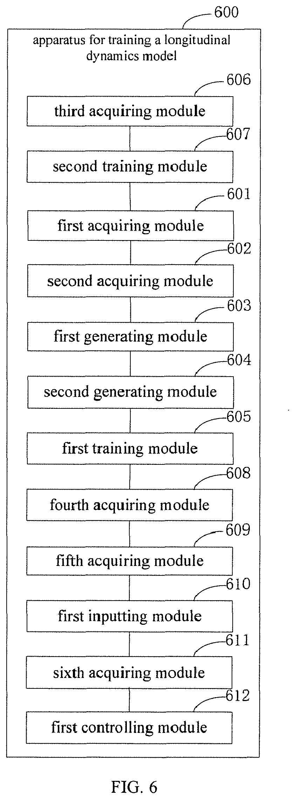

In some embodiments, 601 to 607 in FIG. 6 have the same function and structure as 501 to 507 in FIG. 5. As illustrated in FIG. 6, the apparatus further includes: includes: a fourth acquiring module 608, a fifth acquiring module 609, a first inputting module 610, a sixth acquiring module 611 and a first controlling module 612. The fourth acquiring module 608 is configured to acquire a preset target acceleration and a preset target driving speed of the vehicle. The fifth acquiring module 609 is configured to acquire a first candidate pedaling volume corresponding to the target acceleration and the target driving speed from the driving control table based on the target acceleration and the target driving speed. The first inputting module 610 is configured to acquire a second candidate pedaling volume corresponding to the target acceleration and the target driving speed by inputting the target acceleration and the target driving speed into the longitudinal dynamics model. The sixth acquiring module 611 is configured to acquire a pedaling volume difference between the first candidate pedaling volume and the second candidate pedaling volume. The first controlling module 612 is configured to control driving of the vehicle based on the longitudinal dynamics model after training in response that the pedaling volume difference is less than a preset difference threshold.

In some embodiments, the first controlling module 612 includes: a first acquiring unit, configured to acquire a preset acceleration and a preset driving speed adopted by the vehicle at at least one position of a preset road section; a first inputting unit, configured to input the preset acceleration and the preset driving speed into the longitudinal dynamics model after training to acquire a pedaling volume adopted at the at least one position; and a first controlling unit, configured to control the driving of the vehicle on the preset road section based on the pedaling volume adopted at the at least one position.

In some embodiments, the apparatus further includes: a second controlling module, configured to control the driving of the vehicle based on the driving control table in response that the pedaling volume difference is greater than or equal to the preset difference threshold.

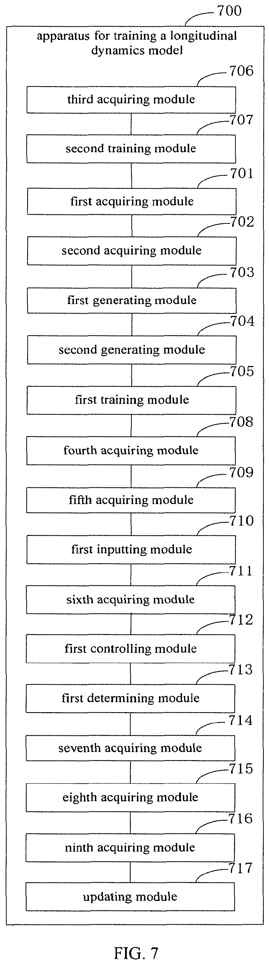

In some embodiments, 701 to 712 in FIG. 7 have the same function and structure as 601 to 612 in FIG. 6. As illustrated in FIG. 7, after the driving of the vehicle is controlled by the longitudinal dynamics model after training, the apparatus further includes: a first determining module 713, a seventh acquiring module 714, an eighth acquiring module 715, a ninth acquiring module 716 and an updating module 717. The first determining module 713 is configured to determine an actual acceleration of the vehicle at a current moment through an inertial measurement unit in the vehicle. The seventh acquiring module 714 is configured to acquire a preset acceleration corresponding to the current moment. The eighth acquiring module 715 is configured to acquire an acceleration error between the actual acceleration and the preset acceleration. The ninth acquiring module 716 is configured to acquire an actual pedaling volume and an actual driving speed at the current moment in response that the acceleration error exceeds a preset error threshold. The updating module 717 is configured to update the historical driving data by adding the actual acceleration, the actual pedaling volume, and the actual driving speed to the historical driving data.

According to the embodiments of the disclosure, the disclosure also provides an electronic device and a readable storage medium.

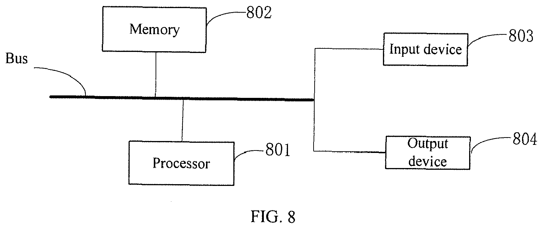

FIG. 8 is a block diagram of an electronic device for implementing a method for training a longitudinal dynamic model according to some embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown herein, their connections and relations, and their functions are merely examples, and are not intended to limit the implementation of the disclosure described and/or required herein.

As illustrated in FIG. 8, the electronic device includes: one or more processors 801, a memory 802, and interfaces for connecting various components, including a high-speed interface and a low-speed interface. The various components are interconnected using different buses and can be mounted on a common mainboard or otherwise installed as required. The processor may process instructions executable within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 801 is taken as an example in FIG. 8.

The memory 802 is a non-transitory computer-readable storage medium according to the disclosure. The memory stores instructions executable by at least one processor, so that the at least one processor executes the method according to the disclosure. The non-transitory computer-readable storage medium of the disclosure stores computer instructions, which are used to cause a computer to execute the method according to the disclosure.

As a non-transitory computer-readable storage medium, the memory 802 is configured to store non-transitory software programs, non-transitory computer executable programs and modules, such as program instructions/modules (for example, the first acquiring module 401, the second acquiring module 402, the first generating module 403, the second generating module 404, and the first training module 405 shown in FIG. 4) corresponding to the method in the embodiment of the disclosure. The processor 801 executes various functional applications and data processing of the server by running non-transitory software programs, instructions, and modules stored in the memory 802, that is, implementing the method in the foregoing method embodiments.

The memory 802 may include a storage program area and a storage data area, where the storage program area may store an operating system and application programs required for at least one function. The storage data area may store data created according to the use of the electronic device for implementing the method. In addition, the memory 802 may include a high-speed random access memory, and a non-transitory memory, such as at least one magnetic disk storage device, a flash memory device, or other non-transitory solid-state storage device. In some embodiments, the memory 802 may optionally include a memory remotely disposed with respect to the processor 801, and these remote memories may be connected to the electronic device for implementing the method through a network. Examples of the above network include, but are not limited to, the Internet, an intranet, a local area network, a mobile communication network, and combinations thereof.

The electronic device for implementing the method for training the longitudinal dynamic model may further include: an input device 803 and an output device 804. The processor 801, the memory 802, the input device 803, and the output device 804 may be connected through a bus or in other manners. In FIG. 8, the connection through the bus is taken as an example.

The input device 803 may receive inputted numeric or character information, and generate key signal inputs related to user settings and function control of an electronic device for implementing the method, such as a touch screen, a keypad, a mouse, a trackpad, a touchpad, an indication rod, one or more mouse buttons, trackballs, joysticks and other input devices. The output device 804 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, sound input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other.

With the technical solution of the embodiments of the disclosure, the longitudinal dynamics model in the vehicle is acquired, and the historical driving data of the vehicle during driving is acquired, in which the historical driving data includes the historical pedaling volumes, the historical driving speeds, and the historical accelerations. The training data is generated based on the historical pedaling volumes and the historical driving speeds, and input into the longitudinal dynamics model to generate the prediction data for the longitudinal dynamics model. The target data is generated based on the historical accelerations. The longitudinal dynamics model is trained based on the target data and the prediction data. The longitudinal dynamics model is trained based on the historical driving data to make the longitudinal dynamics model more optimal, so that the method for training the model effectively reduces the control error in the scene of actual control of the vehicle.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the principle of this application shall be included in the protection scope of this application.

## Claims

1. A method for training a longitudinal dynamics model, comprising:
acquiring (S101; S201) a longitudinal dynamics model in a vehicle;
acquiring (S102; S202) historical driving data of the vehicle during driving,
wherein the historical driving data comprises historical pedaling volumes,
historical driving speeds, and historical accelerations;
generating (S103; S203) training data based on the historical pedaling volumes and the historical driving speeds, and generating (S103; S203) prediction data of the longitudinal dynamics model by inputting the training data to the longitudinal dynamics model;
generating (S104; S204) target data based on the historical accelerations; and
training (S105; S205) the longitudinal dynamics model based on the target data and the prediction data.

2. The method according to claim 1, further comprising:
acquiring a driving control table in the vehicle; and
determining accelerations and driving speeds in the driving control table as an input of a deep belief network, and determining pedaling volumes corresponding to the accelerations and the driving speeds in the driving control table as an output of the deep belief network, to train the deep belief network, so as to acquire the longitudinal dynamics model.

3. The method according to claim 1 or 2, further comprising:
acquiring (S206) a preset target acceleration and a preset target driving speed of the vehicle;
acquiring (S207) a first candidate pedaling volume corresponding to the target acceleration and the target driving speed from the driving control table based on the target acceleration and the target driving speed;
acquiring (S208) a second candidate pedaling volume corresponding to the target acceleration and the target driving speed by inputting the target acceleration and
the target driving speed into the longitudinal dynamics model;
acquiring (S209) a pedaling volume difference between the first candidate pedaling volume and the second candidate pedaling volume; and
controlling (S210) driving of the vehicle based on the longitudinal dynamics model after training in response that the pedaling volume difference is less than a preset difference threshold.

4. The method according to claim 3, further comprising:
controlling (S211) the driving of the vehicle based on the driving control table in response that the pedaling volume difference is greater than or equal to the preset difference threshold.

5. The method according to claim 3 or 4, wherein controlling the driving of the vehicle based on the longitudinal dynamics model after training comprises:
acquiring a preset acceleration and a preset driving speed adopted by the vehicle at at least one position of a preset road section;
inputting the preset acceleration and the preset driving speed into the longitudinal dynamics model after training to acquire a pedaling volume adopted at the at least one position; and
controlling the driving of the vehicle on the preset road section based on the pedaling volume adopted at the at least one position.

6. The method according to any one of claims 3 to 5, further comprising:
determining an actual acceleration of the vehicle at a current moment through an inertial measurement unit in the vehicle;
acquiring a preset acceleration corresponding to the current moment;
acquiring an acceleration error between the actual acceleration and the preset acceleration;
acquiring an actual pedaling volume and an actual driving speed at the current moment in response that the acceleration error exceeds a preset error threshold;
and
updating the historical driving data by adding the actual acceleration, the actual pedaling volume, and the actual driving speed to the historical driving data.

7. An apparatus for training a longitudinal dynamics model, comprising:
a first acquiring module (401; 501; 601; 701), configured to acquire a longitudinal dynamics model in a vehicle;
a second acquiring module (402; 502; 602; 702), configured to acquire historical driving data of the vehicle during driving, wherein the historical driving data comprises historical pedaling volumes, historical driving speeds, and historical accelerations;
a first generating module (403; 503; 603; 703), configured to generate training data based on the historical pedaling volumes and the historical driving speeds,
and generate prediction data of the longitudinal dynamics model by inputting the training data to the longitudinal dynamics model;
a second generating module (404; 504; 604; 704), configured to generate target data based on the historical accelerations; and
a first training module (405; 505; 605; 705), configured to train the longitudinal dynamics model based on the target data and the prediction data.

8. The apparatus according to claim 7, further comprising:
a third acquiring module (506; 606; 706), configured to acquire a driving control table in the vehicle; and
a second training module (507; 607; 707), configured to determine accelerations and driving speeds in the driving control table as an input of a deep belief network, and determine pedaling volumes corresponding to the accelerations and
the driving speeds in the driving control table as an output of the deep belief network, to train the deep belief network, so as to acquire the longitudinal dynamics model.

9. The apparatus according to claim 7 or 8, further comprising:
a fourth acquiring module (608; 708), configured to acquire a preset target acceleration and a preset target driving speed of the vehicle;
a fifth acquiring module (609; 709), configured to acquire a first candidate pedaling volume corresponding to the target acceleration and the target driving speed from the driving control table based on the target acceleration and the target driving speed;
a first inputting module (610; 710), configured to acquire a second candidate pedaling volume corresponding to the target acceleration and the target driving speed by inputting the target acceleration and the target driving speed into the longitudinal dynamics model;
a sixth acquiring module (611; 711), configured to acquire a pedaling volume difference between the first candidate pedaling volume and the second candidate pedaling volume; and
a first controlling module (612; 712), configured to control driving of the vehicle based on the longitudinal dynamics model after training in response that the pedaling volume difference is less than a preset difference threshold.

10. The apparatus according to claim 9, further comprising:
a second controlling module, configured to control the driving of the vehicle based on the driving control table in response that the pedaling volume difference is greater than or equal to the preset difference threshold.

11. The apparatus according to claim 9 or 10, wherein the first controlling module (612; 712) comprises:
a first acquiring unit, configured to acquire a preset acceleration and a preset driving speed adopted by the vehicle at at least one position of a preset road section;
a first inputting unit, configured to input the preset acceleration and the preset driving speed into the longitudinal dynamics model after training to acquire a pedaling volume adopted at the at least one position; and
a first controlling unit, configured to control the driving of the vehicle on the preset road section based on the pedaling volume adopted at the at least one position.

12. The apparatus according to any one of claims 9 to 11, further comprising:
a first determining module (713), configured to determine an actual acceleration of the vehicle at a current moment through an inertial measurement unit in the vehicle;
a seventh acquiring module (714), configured to acquire a preset acceleration corresponding to the current moment;
an eighth acquiring module (715), configured to acquire an acceleration error between the actual acceleration and the preset acceleration;
a ninth acquiring module (716), configured to acquire an actual pedaling volume and an actual driving speed at the current moment in response that the acceleration error exceeds a preset error threshold; and
an updating module (717), configured to update the historical driving data by adding the actual acceleration, the actual pedaling volume, and the actual driving speed to the historical driving data.

13. An electronic device, comprising:
at least one processor; and
a memory communicatively connected with the at least one processor; wherein,
the memory stores instructions executable by the at least one processor, and when the instructions are executed by the at least one processor, the at least one processor executes the method for training the longitudinal dynamics model according to any one of claims 1 to 6.

14. A computer-readable storage medium storing computer instructions thereon, wherein the computer instructions are configured to make a computer execute the method for training the longitudinal dynamics model according to any one of claims 1 to 6.
